# EUROPEAN PATENT APPLICATION

(11) **EP 3 133 279 A1**
(43) Date of publication of application: **22.02.2017**
(21) Application number: 15779737.4
(22) Date of filing: 27.02.2015
(51) Int. Cl.: F02M 61/18, B29C 45/00, B29C 45/26, F02M 51/06

(54) **METHOD FOR MANUFACTURING NOZZLE PLATE FOR FUEL INJECTION DEVICE, MOLD FOR NOZZLE PLATE FOR FUEL INJECTION DEVICE, AND NOZZLE PLATE FOR FUEL INJECTION DEVICE**

(30) Priority: 17.04.2014 JP 2014085424
(71) Applicant: Enplas Corporation, Kawaguchi-shi, Saitama 332-0034 (JP)
(72) Inventor: NOGUCHI, Koji, Kawaguchi-shi Saitama 332-0034 (JP)
(74) Representative: Prinz & Partner mbB
(86) International application number: PCT/JP2015/055773
(87) International publication number: WO 2015/159596

(57) **Abstract**

[Object]

An object is to provide a manufacturing method for a fuel injection device nozzle plate that can accurately mold nozzle holes and the vicinity thereof and does not cause a molding failure easily, a die, and a fuel injection device nozzle plate.

[Solution]

A gate (3) is disposed so as to be opened to a cavity portion for forming a plate body part (11) for forming a fuel injection device nozzle plate (1), the cavity portion for forming a portion surrounded by a plurality of nozzle holes (7). There are no differences in the times required for the molten resin injected from the gate (3) into the cavity to reach portions for forming the plurality of nozzle holes (7). As a result, a molding failure of the nozzle holes (7) and the vicinity thereof caused by differences in the charge speeds of molten resin can be prevented and the shapes of the nozzle holes (7) and the vicinity thereof can be formed accurately.

## Description

### Technical Field

The present invention relates to a manufacturing method for a fuel injection device nozzle plate (abbreviated below as a nozzle plate as appropriate), attached to the fuel injection port of a fuel injection device, that atomizes and injects fuel flowing from the fuel injection port, a die for the nozzle plate, and the nozzle plate.

### Background Art

An internal combustion engine (abbreviated below as an engine) of an automobile or the like mixes fuel injected from a fuel injection device and air introduced via an intake pipe to generate a combustible gas mixture and burns the combustible gas mixture in the cylinder. It is known that the mixture state of fuel injected from the fuel injection device and air significantly affects the performance of this type of engine and, in particular, the atomization of fuel injected from the fuel injection device is an important factor governing the performance of the engine.

In such a fuel injection device, in order to atomize fuel in spray, a nozzle plate is attached to the fuel injection port of a valve body and fuel is injected through a plurality of fine nozzle holes formed in the nozzle plate (see PTL 1 and PTL 2). It is known that it is important to set the ratio (d/t) of a hole diameter d of the nozzle holes to a thickness t of the nozzle plate to a particular range for atomization of fuel particles in spray in such a nozzle plate (see PTL 3). The hole diameter d of the nozzle holes is often set to a value from 0.1 mm to 0.3 mm and the thickness (length of the nozzle holes) t of the nozzle plate is often set to a value from 0.1 mm to 0.2 mm.

In addition, there is a known fuel injection device nozzle plate in which a swirl chamber is formed in the surface facing the fuel injection port of a valve body by, for example, carving so that fuel injected from the fuel injection port is guided to nozzle holes via the swirl chamber, rotating force is given to the fuel in the swirl chamber, the fuel having received the rotating force is injected from the nozzle holes, and the fuel is atomized (see PTL 4).

### (Conventional example 1)

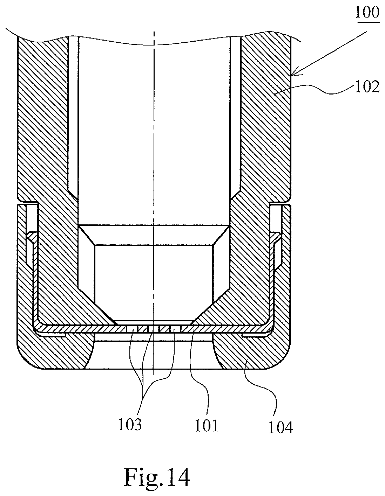

The conventional nozzle plate described above has a plurality of fine nozzle holes in a metal thin plate and is fixed to a metal valve body by welding, so the nozzle holes and the vicinity thereof are easily damaged when the fuel injection device is conveyed or attached to an engine. To solve such a problem, a fuel injection device 100 having the structure as illustrated in Fig. 14 has been developed. In the fuel injection device 100 illustrated in Fig. 14, a resin or metal sleeve 104 for protecting nozzle holes 103 of the nozzle plate 101 and the vicinity thereof is attached to the end of a valve body 102 to which a the nozzle plate 101 is fixed (see PTL 5).

### (Comparative example 1)

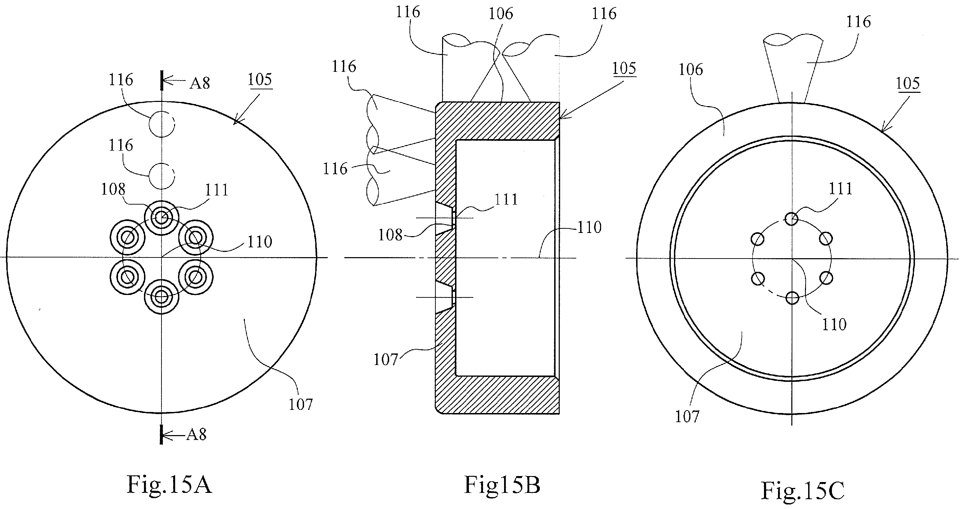

In recent years, in a fuel injection device to be attached to a port injection engine, for reduction in the manufacturing cost and reduction in the size and weight, it is considered to form (injection-mold) a resin nozzle plate obtained by integrating the nozzle plate 101 with the sleeve 104 illustrated in Fig. 14 and attach this resin nozzle plate to the end of the valve body 102. Fig. 15 illustrates such a resin nozzle plate 105.

The nozzle plate 105 illustrated in Fig. 15 includes the cylindrical fitting part 106 fixed to the outer periphery of the front end side of the valve body and a plate body part 107 formed in a disc shape so as to block one end side of the cylindrical fitting part 106. The plate body part 107 of the nozzle plate 105 is disposed facing the fuel injection port of the valve body, a plurality of thin plate portions 108 are formed at regular intervals around a central axis 110 of the nozzle plate 105, and nozzle holes 111 are formed in the thin plate portions 108.

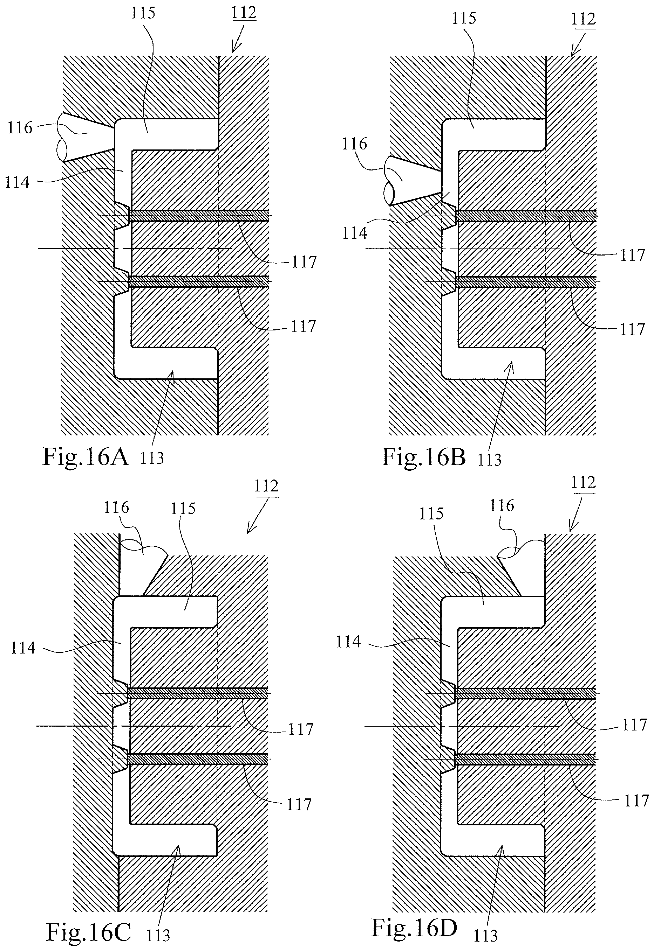

Fig. 16 is a cross sectional view illustrating a die 112 used for injection molding of the nozzle plate 105. As illustrated in Fig. 16, a cavity 113 of the die 112 mainly includes a first cavity portion 114 for forming the plate body part 107 and a second cavity portion 115 for forming the cylindrical fitting part 106. Then, in the die 112, since the injection pressure needs to be kept at the last stage of the injection molding process so that resin injected into the cavity 113 fills every corner of the cavity 113 and the dwell pressure needs to be applied to improve the accuracy of the nozzle plate 105 to be molded, a gate 116 is opened to a cavity portion for forming a portion thicker than the thin plate portion 108. For example, the opening position of the gate 116 close to the cavity 113 is the position (first gate opening position in Fig. 16(a)) in the first cavity portion 114 close to the second cavity portion 115, the position (second gate opening position in Fig. 16(b)) in the first cavity portion 114 radially inward of the first gate opening position and radially outward of the portion for forming the thin plate portion 108, the position (third gate opening position in Fig. 16(c)) in the second cavity portion 115 close to the first cavity portion 114, or the position (fourth gate opening position in Fig. 16(d)) in the second cavity portion 115 away from the first cavity portion 114. Nozzle hole formation pins 117 for forming the nozzle holes 111 project into the cavity 113.

### (Conventional example 2)

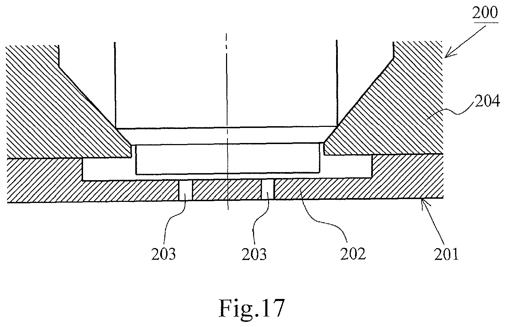

Fig. 17 is a cross sectional view illustrating the front end side of a fuel injection device 200 to which a nozzle plate 201 according to conventional example 2 is attached. The nozzle plate 201 according to conventional example 2 is provided with a plurality of nozzle holes 203 in a thin plate portion 202, which is a metal plate member, and is fixed to the end of a metal valve body 204 by welding (see PTL 6). In the nozzle plate 201 according to conventional example 2, substitution of resin is considered for the same purpose as in the nozzle plate 101 according to conventional example 1.

### (Comparative example 2)

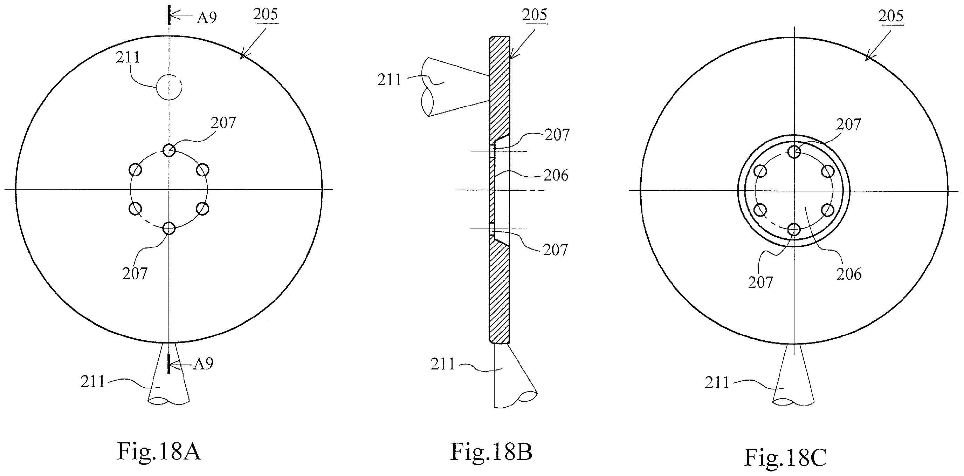

Fig. 18 illustrates a resin nozzle plate 205 for which substitution for the metal nozzle plate 201 is considered. The nozzle plate 205 in Fig. 18 is formed in a disc shape, provided with a thin plate portion 206 formed by denting the rear surface of the central part like a truncated cone, and provided with a plurality of nozzle holes 207 in the thin plate portion 206.

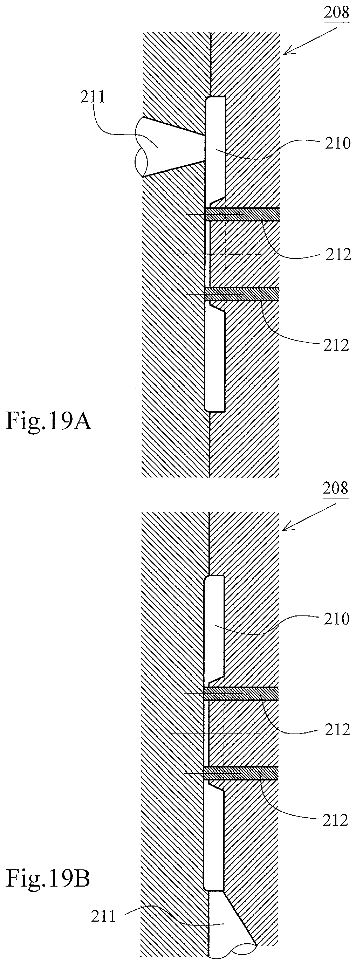

Fig. 19 is a cross sectional view illustrating a die 208 used for injection molding of the nozzle plate 205. As illustrated in Fig. 19, in the die 208, since the injection pressure needs to be kept at the last stage of the injection molding process so that resin injected into the cavity 210 fills every corner of the cavity 210 and the dwell pressure needs to be applied to improve the accuracy of the nozzle plate 205 to be molded, a gate 211 is opened to a cavity portion for forming a portion thicker than the thin plate portion 206. For example, the opening position of the gate 211 close to the cavity 210 is the position (first gate opening position in Fig. 19(a)) in the middle in the radial direction of the cavity portion of the cavity 210 for forming the thick-walled portion of the nozzle plate 205 or the position (second gate opening position in Fig. 19(b)) on the side surface at the outer end in the radial direction of the cavity 210. Nozzle hole formation pins 212 for forming the nozzle holes 207 project into the cavity 210.

### Citation List

### Patent Literature

- PTL 1:: JP-A-2000-45913
- PTL 2:: JP-A-2005-207274
- PTL 3:: Japanese Patent No. 4097056
- PTL 4:: JP-A-2012-215135
- PTL 5:: JP-A-2004-211552
- PTL 6:: JP-A-2002-115628

### Summary of Invention

### Technical Problem

However, when the nozzle plate 105 or 205 is injection-molded using the die 112 or 208 illustrated in Fig. 16 or Fig. 19, molten resin does not easily flow into the thin plate portion 108 or 206 (vicinity of the nozzle holes 111 or 207) in which the thickness is significantly reduced and there is delay in filling the cavity portion for forming the plurality of nozzle holes 111 or 207 and the vicinity thereof with molten resin. Accordingly, it becomes difficult to accurately form the nozzle holes 111 or 207 and the vicinity thereof and a molding failure such as gas burning easily occurs in the vicinity of the nozzle holes 111 or 207 distant from the gate 116 or 211.

Therefore, the invention provides a manufacturing method for a nozzle plate that can accurately mold nozzle holes and the vicinity thereof and does not cause a molding failure easily, a die for the nozzle plate, and the nozzle plate.

### Solution to Problem

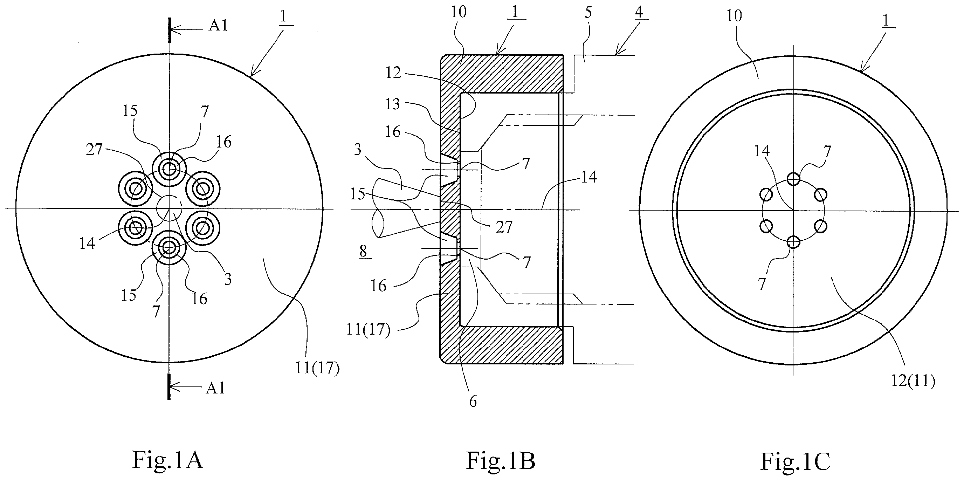

The invention relates to a manufacturing method for a fuel injection device nozzle plate 1 including a plate body part 11 disposed facing a fuel injection port 6 of a fuel injection device 4, one thin plate portion or a plurality of thin plate portions 16, 34, or 37 of the plate body part 11 provided with a plurality of nozzle holes 7 through which fuel injected from the fuel injection port 6 passes, and a thick-walled portion 17, 35, or 41 formed at a position in the plate body part 11 at which the thin plate portions 16, 34, or 37 are surrounded, as illustrated in Fig 1 to Fig. 13. In the invention, of a cavity 21 for forming the plate body part 11, a cavity portion for forming a portion surrounded by the plurality of nozzle holes 7 is provided with a gate 3 for injecting molten resin into the cavity 21. The molten resin injected from the gate 3 into the cavity 21 flows radially toward portions for forming the nozzle holes 7.

In addition, the invention relates to a die 2 for a fuel injection device nozzle plate 1 including a plate body part 11 disposed facing a fuel injection port 6 of a fuel injection device 4, one thin plate portion or a plurality of thin plate portions 16, 34, or 37 of the plate body part 11 provided with a plurality of nozzle holes 7 through which fuel injected from the fuel injection port 6 passes, and a thick-walled portion 17, 35, or 41 formed at a position in the plate body part 11 at which the thin plate portions 16, 34, or 37 are surrounded, as illustrated in Fig 1 to Fig. 13. In the invention, of a cavity 21 for forming the plate body part 11, a cavity portion for forming a portion surrounded by the plurality of nozzle holes 7 is provided with a gate 3 for injecting molten resin into the cavity 21. The molten resin injected from the gate 3 into the cavity 21 flows radially toward portions for forming the nozzle holes 7.

In addition, the invention relates to a fuel injection device nozzle plate 1 including a plate body part 11 disposed facing a fuel injection port 6 of a fuel injection device 4, one thin plate portion or a plurality of thin plate portions 16, 34, or 37 of the plate body part 11 provided with a plurality of nozzle holes 7 through which fuel injected from the fuel injection port 6 passes, and a thick-walled portion 17, 35, or 41 formed at a position in the plate body part 11 at which the thin plate portions 16, 34, or 37 are surrounded, as illustrated in Fig 1 to Fig. 13. The fuel injection device nozzle plate 1 according to the invention is formed by injecting molten resin from a gate 3 into a cavity 21 for a die, and a cut-off mark of the gate 3 is positioned in a portion surrounded by the plurality of nozzle holes 7.

### Advantageous Effects of Invention

According to the invention, by suppressing differences in the formation times (the charge times of molten resin) of a plurality of nozzle holes significantly affecting spray characteristics, a molding failure of the nozzle holes and the vicinity thereof can be prevented and the shapes of the nozzle holes and the vicinity thereof can be formed accurately.

### Brief Description of Drawings

[Fig. 1] Fig. 1 illustrates the relationship between a nozzle plate formed by a manufacturing method and a die according to a first embodiment of the invention and a gate position. Fig. 1 (a) illustrates the gate position on the front side of the nozzle plate, Fig. 1 (b) illustrates the gate position in a cross section of the nozzle plate taken along line A1-A1 in Fig. 1(a), and Fig. 1(c) is a back view illustrating the fuel injection device nozzle plate.
[Fig. 2] Fig. 2 is a cross sectional view illustrating the die according to the first embodiment of the invention.
[Fig. 3] Fig. 3 illustrates modification 1 of the first embodiment and illustrates the relationship between a nozzle plate formed by a manufacturing method and a die according to modification 1 and a gate position. Fig. 3(a) illustrates the gate position on the front side of the nozzle plate, Fig. 3(b) illustrates the gate position in a cross section of the nozzle plate taken along line A2-A2 in Fig. 3(a), and Fig. 3(c) is a back view illustrating the nozzle plate.
[Fig. 4] Fig. 4 is a cross sectional view illustrating the die according to modification 1 of the first embodiment.
[Fig. 5] Fig. 5 illustrates the relationship between a nozzle plate formed by a manufacturing method and a die according to modification 2 of the first embodiment and a gate position and this drawing corresponds to Fig. 1(a).
[Fig. 6] Fig. 6 illustrates the relationship between a nozzle plate formed by a manufacturing method and a die according to modification 3 of the first embodiment and a gate position and this drawing corresponds to Fig. 1(a).
[Fig. 7] Fig. 7 illustrates the relationship between a fuel injection device nozzle plate formed by a manufacturing method and a die according to a second embodiment of the invention and a gate position. Fig. 7(a) illustrates the gate position on the front side of the fuel injection device nozzle plate, Fig. 7(b) illustrates the gate position in a cross section of the fuel injection device nozzle plate taken along line A3-A3 in Fig. 7(a), and Fig. 7(c) is a back view illustrating the fuel injection device nozzle plate.
[Fig. 8] Fig. 8 is a cross sectional view illustrating the die according to the second embodiment of the invention.
[Fig. 9] Fig. 9 illustrates the relationship between a fuel injection device nozzle plate formed by a manufacturing method and a die according to a third embodiment of the invention and a gate position. Fig. 9(a) illustrates the gate position on the front side of the fuel injection device nozzle plate, Fig. 9(b) illustrates the gate position in a cross sectional view of the fuel injection device nozzle plate taken along line A4-A4 in Fig. 9(a), and Fig. 9(c) is a back view illustrating the fuel injection device nozzle plate.
[Fig. 10] Fig. 10(a) is an enlarged view illustrating a part of Fig. 9(a) and Fig. 10(b) is a cross sectional view taken along line A5-A5 in Fig. 10(a).
[Fig. 11] Fig. 11 is a cross sectional view illustrating the die according to the third embodiment of the invention.
[Fig. 12] Fig. 12 illustrates the fourth embodiment of the invention. Fig. 12(a) illustrates a gate position on the front side of a fuel injection device nozzle plate and Fig. 12(b) illustrates the gate position in a cross sectional view of the fuel injection device nozzle plate taken along line A6-A6 in Fig. 12(a).
[Fig. 13] Fig. 13 illustrates a fifth embodiment of the invention. Fig. 13(a) illustrates a gate position on the front side of a fuel injection device nozzle plate, Fig. 13(b) illustrates the gate position in a cross sectional view of the fuel injection device nozzle plate taken along line A7-A7 in Fig. 13(a), and Fig. 13(c) is a back view illustrating the fuel injection device nozzle plate.
[Fig. 14] Fig. 14 is a cross sectional view illustrating the front end side of a fuel injection device to which a nozzle plate according to a conventional example 1 has been attached.
[Fig. 15] Fig. 15(a) illustrates a gate position on the front side of a nozzle plate according to a comparative example 1, Fig. 15(b) illustrates the gate position in a cross section of the nozzle plate taken along line A8-A8 in Fig. 15(a), and Fig. 15(c) illustrates the gate position seen from the back side of the nozzle plate.
[Fig. 16] Fig. 16 is a cross sectional view illustrating a die used for the injection molding of the nozzle plate according to the comparative example 1 illustrated in Fig. 15.
[Fig. 17] Fig. 17 is a cross sectional view illustrating the front end side of a fuel injection device to which a nozzle plate according to conventional example 2 has been attached.
[Fig. 18] Fig. 18(a) illustrates a gate position on the front side of the nozzle plate according to conventional example 2, Fig. 18(b) illustrates the gate position in a cross section of the nozzle plate taken along line A9-A9 in Fig. 18(a), and Fig. 18(c) illustrates the gate position seen from the back side of the nozzle plate.
[Fig. 19] Fig. 19 is a cross sectional view illustrating a die used for the injection molding of the nozzle plate according to comparative example 2 illustrated in Fig. 18.

### Description of Embodiments

Embodiments of the invention will be described in detail below with reference to the drawings.

### [First embodiment]

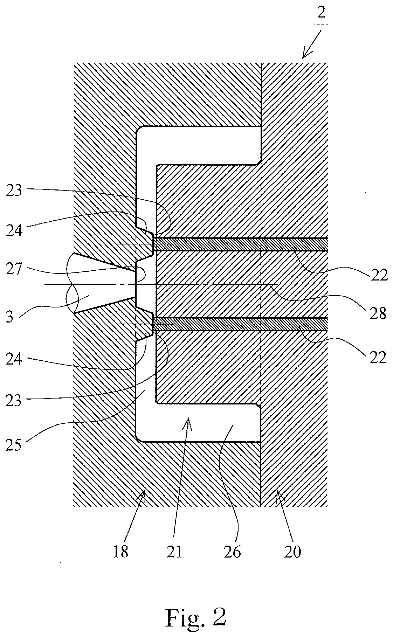

The fuel injection device nozzle plate 1 (abbreviated below as the nozzle plate) according to the first embodiment of the invention, the manufacturing method for the nozzle plate 1, and the die 2 for the nozzle plate 1 will be described in detail with reference to Fig. 1 and Fig. 2. Fig. 1 illustrates the relationship between the nozzle plate 1 and the gate 3 for injection molding. In addition, Fig. 2 is a cross sectional view illustrating the die 2 for the nozzle plate 1.

As illustrated in Fig. 1, the nozzle plate 1 formed by injection molding is attached to the end of a valve body 5 of the fuel injection device 4 and sprays fuel injected from the fuel injection port 6 of the valve body 5 through a plurality of (six in the embodiment) nozzle holes 7 toward an intake pipe 8. This nozzle plate 7 is a bottomed cylindrical body, made of synthetic resin material (for example, PPS, PEEK, POM, PA, PES, PEI, or LCP), that includes a cylindrical fitting part 10 and the plate body part 11 formed integrally with one end side of the cylindrical fitting part 10. This nozzle plate 7 is fixed to the valve body 5 in the state in which the cylindrical fitting part 10 is fitted onto the outer periphery of the front end side of the valve body 5 without any space and an inner plane 12 of the plate body part 11 abuts against a front end surface 13 of the valve body 5.

The plate body part 11 is formed in a disc shape and the plurality of nozzle holes 7 are formed at regular intervals around a central axis 14. The nozzle holes 7 are formed at the centers of the thin discoid plate portions 16 positioned at the bottom of nozzle hole formation concave portions 15 formed by, for example, countersinking the plate body part 11 like a truncated cone shape. In the plate body part 11, the thick-walled portion 17 is formed so as to surround the thin plate portions 16 and the thick-walled portion 17 reinforces the thin plate portions 16. The thick-walled portion 17 is formed to approximately 0.5 mm when the wall thickness of the thin plate portions 16 is 0.1 mm. The nozzle holes 7 are circular holes passing through the front and rear of the thin plate portions 16 and formed to have a diameter of 0.2 mm when the wall thickness of the thin plate portions 16 is 0.1 mm. However, the dimensions of the thick-walled portion 17, the thin plate portions 16, and the nozzle holes 7 are only examples for facilitating the understanding of the invention and may be appropriate values for atomization of fuel fine particles in spray. In addition, the cylindrical fitting part 10 formed integrally with the plate body part 11 is formed to have a wall thickness larger than the plate body part 11.

In the die 2 illustrated in Fig. 2, the cavity 21 is formed between a first die 18 and a second die 20 and nozzle hole formation pins 22 for forming the nozzle holes 7 project into the cavity 21. The ends of nozzle hole formation pins 22 abut against a cavity inner plane 23 of the first die 18. The portions of the first die 18 against which the nozzle hole formation pins 22 abut are convexities 24 for forming the nozzle hole formation concave portions 15. The cavity 21 includes a first cavity portion 25 for forming the plate body part 11 and a second cavity portion 26 for forming the cylindrical fitting part 10. At the center of the first cavity portion 25, the gate 3 for injecting molten resin into the cavity 21 is opened. The center of an opening 27 of the gate 3 is positioned in a central axis 28 of the cavity 21 and positioned equidistantly from the centers (the centers of the nozzle hole formation pins 22) of the plurality of nozzle holes 7 (see Figs. 1 (a) and 1 (b)).

In the die 2 described above, when molten resin is injected from the gate 3 into the cavity 21, then the molten resin flows through the cavity 21 radially, the molten resin concurrently reaches the portions (the cavity portion surrounding the plurality of nozzle hole formation pins 22) of the first cavity portion 25 that form the plurality of nozzle holes 7, the cavity portion (25) surrounding the plurality of nozzle hole formation pins 22 is filled with the molten resin, the molten resin evenly flows concentrically toward the radially outward end of the first cavity portion 25, and the second cavity portion 26 is filled with the molten resin. In addition, in the die 2 according to the embodiment, since the cavity portion (25) for forming the thin plate portions 16 and the nozzle holes 7 is positioned in the vicinity of the gate 3 and the injection pressure and the dwell pressure are applied evenly and surely to the cavity portion (25) that forms the thin plate portions 16 and the nozzle holes 7, the shapes of the nozzle holes 7 and the vicinity thereof are formed accurately. In the nozzle plate 1 after injection molding, the cut-off mark (gate mark) of the gate 3 is formed at the center (position equidistant from the centers of the nozzle holes 7) of the plate body part 11.

In the manufacturing method and the die 2 for the nozzle plate 1 according to the embodiment described above, the plurality of nozzle holes 7 significantly affecting spray characteristics are formed concurrently, a molding failure caused by differences in the formation times (the charge times of molten resin) of the nozzle holes 7 can be prevented, and the shapes of the nozzle holes 7 and the vicinity thereof can be formed accurately.

### (Modification 1)

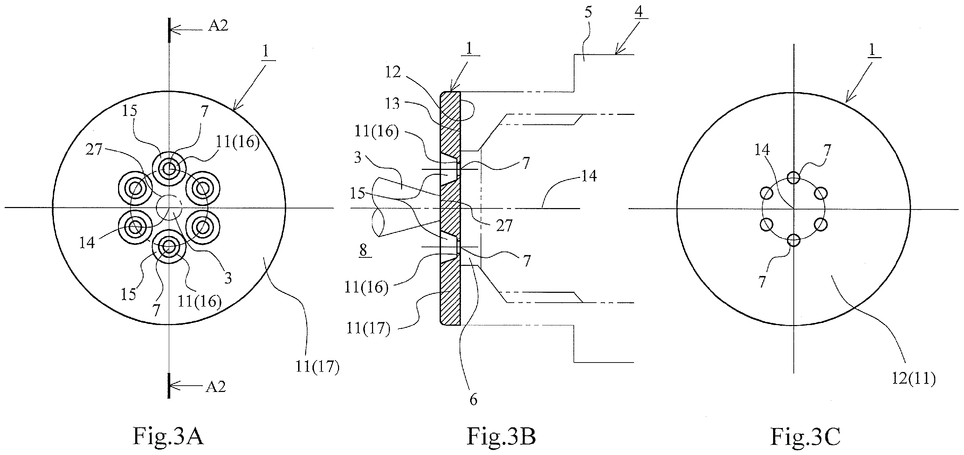

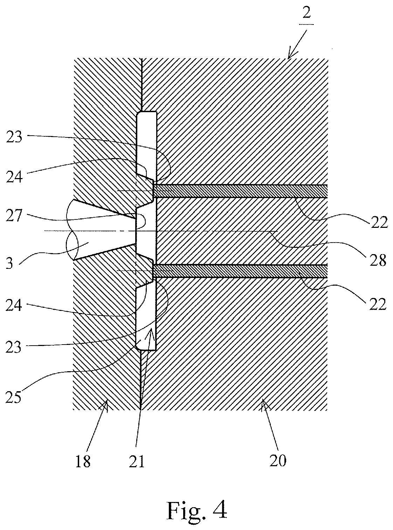

A modification of the nozzle plate 1, the manufacturing method for the nozzle plate 1, and the die 2 for the nozzle plate 1 according to the first embodiment will be described in detail with reference to Fig. 3 and Fig. 4. Fig. 3 illustrates the relationship between the nozzle plate 1 and the gate 3 for injection molding. In addition, Fig. 4 is a cross sectional view illustrating the die 2 for the nozzle plate 1. In Fig. 3 and Fig. 4 illustrating the modification, components corresponding to those in Fig. 1 and Fig. 2 illustrating the first embodiment are given the same reference numerals to omit duplicate descriptions as in the first embodiment above as appropriate.

The nozzle plate 7 according to the modification does not have the cylindrical fitting part 10 of the nozzle plate 7 according to the first embodiment and only has the component corresponding to the plate body part 11 of the nozzle plate 7 according to the first embodiment. The nozzle plate 7 according to the modification is fixed to the valve body 5 in the state in which the inner plane 12 of the plate body part 11 is in contact with the front end surface 13 of the valve body 5 as in the nozzle plate 7 according to the first embodiment.

In the die 2 illustrated in Fig. 4, the cavity 21 is formed between the first die 18 and the second die 20 and the nozzle hole formation pins 22 for forming the nozzle holes 7 project into the cavity 21. The ends of the nozzle hole formation pins 22 abut against the cavity inner plane 23 of the first die 18. The portions of the first die 18 against which the nozzle hole formation pins 22 abut are the convexities 24 for forming the nozzle hole formation concave portions 15. The cavity 21 is the same as the cavity 21 of the die 2 according to the first embodiment except the second cavity portion 26 and corresponds to the first cavity portion 25 of the cavity 21 for the die according to the first embodiment. At the center of the cavity 21, the gate 3 for injecting molten resin into the cavity 21 is opened. The center of the opening 27 of the gate 3 is positioned in the central axis 28 of the cavity 21 and positioned equidistantly from the centers (the centers of the nozzle hole formation pins 22) of the plurality of nozzle holes 7 (see Figs. 3(a) and 3(b)).

In the die 2 described above, when molten resin is injected from the gate 3 into the cavity 21, then the molten resin flows through the cavity 21 radially, the molten resin concurrently reaches the portions (the cavity portion surrounding the plurality of nozzle hole formation pins 22) in the cavity 21 that form the plurality of nozzle holes 7, the cavity portion surrounding the plurality of nozzle hole formation pins 22 is filled with the molten resin, the molten resin evenly flows concentrically toward the radially outward end of the first cavity 21, and the entire cavity 21 is filled with the molten resin. In addition, in the die 2 according to the embodiment, since the cavity portion for forming the thin plate portions 16 and the nozzle holes 7 is positioned in the vicinity of the gate 3 and the injection pressure and the dwell pressure are applied evenly and surely to the cavity portion for forming the thin plate portions 16 and the nozzle holes 7, the shapes of the nozzle holes 7 and the vicinity thereof are formed accurately. In the nozzle plate 1 after injection molding, the cut-off mark (gate mark) of the gate 3 is formed at the center (position equidistant from the centers of the nozzle holes 7) of the plate body part 11. This modification described above can obtain the same effects as in the first embodiment described above.

### (Modification 2)

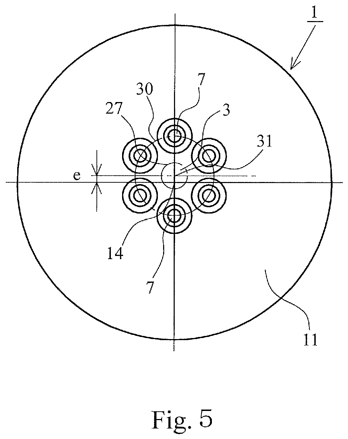

Fig. 5 illustrates modification 2 of the nozzle plate 1, the manufacturing method for the nozzle plate 1, and the die 2 for the nozzle plate 1 according to the first embodiment and this drawing corresponds to Fig. 1(a).

As illustrated in Fig. 5, when a center 31 of a circle 30 passing through the centers of the plurality of nozzle holes 7 is eccentric (as indicated by (e)) with respect to the central axis 14 of the nozzle plate 1, since the center of the opening 27 to the cavity is disposed equidistantly (the center 31 of the circle 30)from the centers (the centers of the nozzle hole formation pins) of the nozzle holes 7, the gate 3 is positioned eccentrically with respect to the central axis (the central axis 14 of the nozzle plate 1) of the cavity. The modification described above can obtain the same effects as in the first embodiment described above.

### (Modification 3)

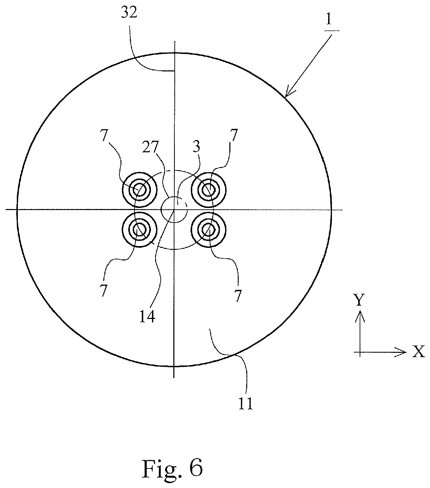

Fig. 6 illustrates modification 3 of the nozzle plate 1, the manufacturing method for the nozzle plate 1, and the die 2 for the nozzle plate 1 according to the first embodiment and this drawing corresponds to Fig. 1(a).

As illustrated in Fig. 6, when the plurality of nozzle holes 7 are formed at irregular intervals around the central axis 14 of the nozzle plate 1 so as to be line-symmetric with respect to a center line 32 parallel to the Y-axis, the center of the opening 27 to the cavity is positioned in the central axis (the central axis 14 of the nozzle plate 1) of the cavity and the center of the opening 27 to the cavity is positioned equidistantly from the centers (the centers of the nozzle hole formation pins) of the nozzle holes 7. The modification described above can obtain the same effects as in the first embodiment described above.

### [Second embodiment]

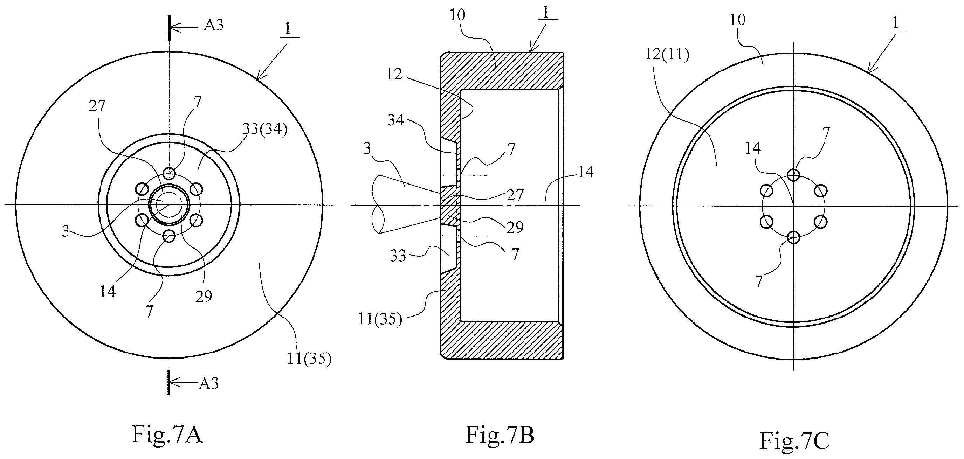

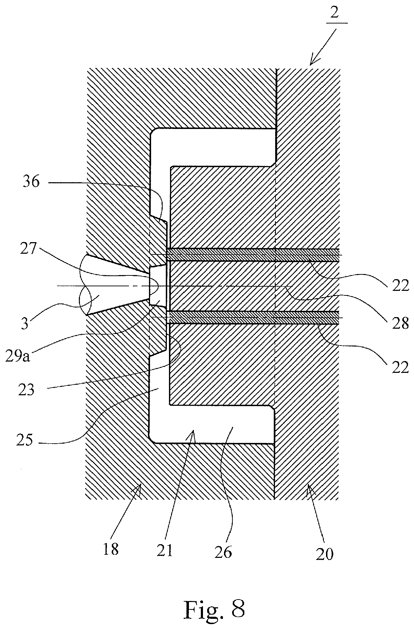

The nozzle plate 1 according to the second embodiment of the invention, the manufacturing method for the nozzle plate 1, and the die 2 for the nozzle plate 1 will be described in detail with reference to Fig. 7 and Fig. 8. Fig. 7 illustrates the relationship between the nozzle plate 1 according to the embodiment and the gate 3 for injection molding. In addition, Fig. 8 is a cross sectional view illustrating the die 2 for the nozzle plate 1 according to the embodiment.

As illustrated in Fig. 7, the nozzle plate 1 formed by injection molding is a bottomed cylindrical body, made of synthetic resin (for example, PPS, PEEK, POM, PA, PES, PEI, or LCP), that includes the cylindrical fitting part 10 and the plate body part 11 formed integrally with one end side of the cylindrical fitting part 10, as in the nozzle plate 1 according to the first embodiment.

The plate body part 11 is formed in a disc shape and the plurality of nozzle holes 7 are formed at regular intervals around the central axis 14. The nozzle holes 7 are formed in a thin plate portion 34 positioned at the bottom of nozzle hole formation concave portions 33 formed by, for example, countersinking the plate body part 11 like a hollow disc shape. In the plate body part 11, a thick-walled portion 35 is formed so as to surround the thin plate portion 34 and the thick-walled portion 35 reinforces the thin plate portion 34. The wall thickness of the thin plate portion 34, the wall thickness of the thick-walled portion 35, and the diameter of the nozzle holes 7 are determined in the same way as in the nozzle plate 1 according to the first embodiment described above.

In the die 2 illustrated in Fig. 8, the cavity 21 is formed between the first die 18 and the second die 20 and the nozzle hole formation pins 22 for forming the nozzle holes 7 project into the cavity 21. The ends of the nozzle hole formation pins 22 abut against the cavity inner plane 23 of the first die 18.

The portions of the first die 18 against which the nozzle hole formation pins 22 abut are convexities 36 for forming the nozzle hole formation concave portions 33 shaped like a hollow disc. The cavity 21 includes the first cavity portion 25 for forming the plate body part 11 and the second cavity portion 26 for forming the cylindrical fitting part 10. At the center of the first cavity portion 25, the gate 3 for injecting molten resin into the cavity 21 is opened. The center of the opening 27 of the gate 3 is positioned in the central axis 28 of the cavity 21 and positioned equidistantly from the centers (the centers of the nozzle hole formation pins 22) of the plurality of nozzle holes 7 (see Figs. 7(a) and 7(b)).

In the die 2 described above, when molten resin is injected from the gate 3 into the cavity 21, then the molten resin flows through the cavity 21 radially, the molten resin concurrently reaches the portions (the cavity portion surrounding the plurality of nozzle hole formation pins 22) of the first cavity portion 25 that form the plurality of nozzle holes 7, the cavity portion surrounding the plurality of nozzle hole formation pins 22 is filled with the molten resin, the molten resin evenly flows toward the radially outward end of the plate body part 11, and the second cavity portion 26 is filled with the molten resin. In addition, in the die 2 according to the embodiment, since the cavity portion of the first cavity portion 25 that forms the thin plate portion 34 and the nozzle holes 7 is positioned in the vicinity of the gate 3 and the dwell pressure is evenly and surely applied to the cavity portion for forming the thin plate portion 34 and the nozzle holes 7, the shapes of the nozzle holes 7 and the vicinity thereof are formed accurately. In the nozzle plate 1 after injection molding, the cut-off mark (gate mark) of the gate 3 is formed in the part of a thick-walled gate base 29 surrounded by the thin plate portion 34, the part being at the center (the position equidistant from the centers of the nozzle holes 7) of the plate body part 11. The gate base 29 has the same wall thickness as the thick-walled portion 35 of the plate body part 11 to obtain the strength enduring a force applied when the gate 3 is separated from the nozzle plate 1 so that the periphery of the gate 3 is not torn and broken when the gate 3 is separated (see Fig. 7). In addition, a cavity portion 29a for forming the gate base 29 has a capacity large enough to store molten resin for forming the thin plate portion 34 of the plate body part 11 (see Fig. 8). The gate base 29 may be thicker than the thick-walled portion 35 of the plate body part 11 to obtain the strength enduring the force applied during separation of the gate 3. In addition, the gate base 29 may be thinner than the thick-walled portion 35 of the plate body part 11 as long as the gate base 29 has a strength enduring the force applied during separation of the gate 3.

In the manufacturing method for the nozzle plate 1 according to the embodiment and the die 2 for the nozzle plate 1 as described above, the plurality of nozzle holes 7 significantly affecting spray characteristics are formed concurrently, a molding failure caused by differences in the formation times (the charge times of molten resin) of the nozzle holes 7 can be prevented, and the shapes of the nozzle holes 7 and the vicinity thereof can be formed accurately.

### [Third embodiment]

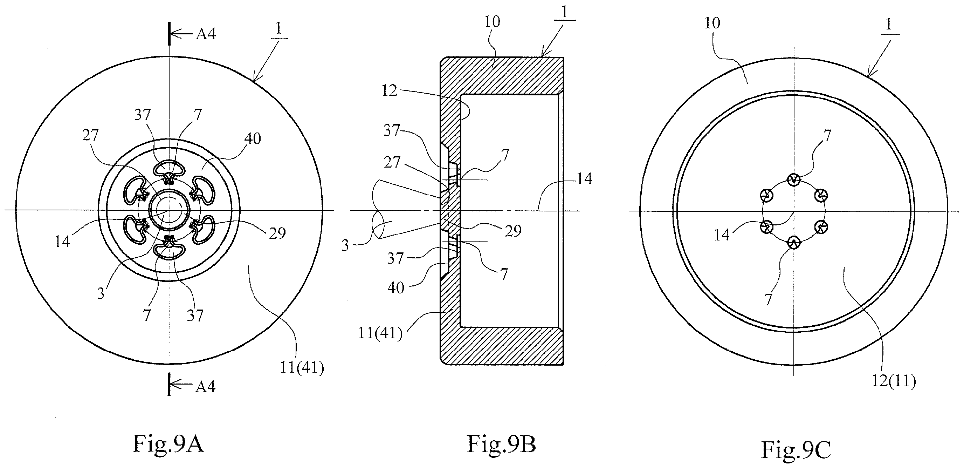

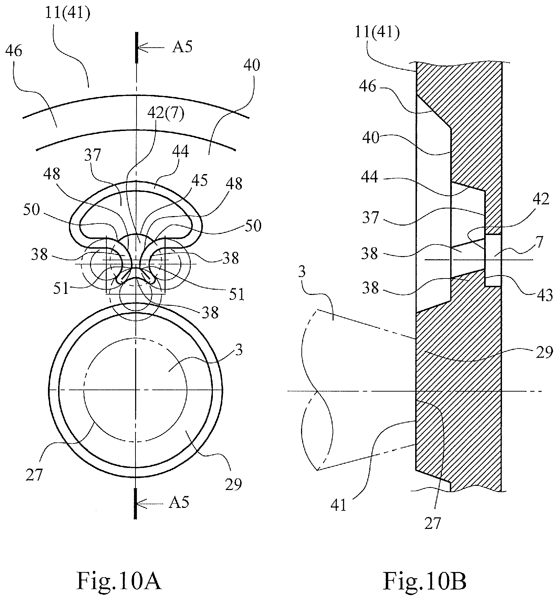

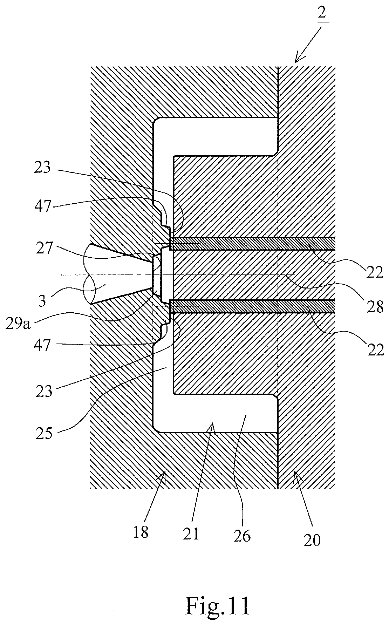

The nozzle plate 1 according to the third embodiment of the invention, the manufacturing method for the nozzle plate 1, and the die 2 for the nozzle plate 1 will be described in detail below with reference to Fig. 9 to Fig. 11. Fig. 9 illustrates the relationship between the nozzle plate 1 according to the embodiment and the gate 3 for injection molding. Fig. 10(a) is an enlarged view illustrating a part of Fig. 9(a). Fig. 10(b) is a cross sectional view taken along line A5-A5 in Fig. 10(a). Fig. 11 is a cross sectional view illustrating the die 2 for the nozzle plate 1 according to the embodiment.

As illustrated in Fig. 9 and Fig. 10, the nozzle plate 1 formed by injection molding includes the cylindrical fitting part 10 and the plate body part 11 formed so as to block one end side of the cylindrical fitting part 10, as in the nozzle plates 1 according to the first and second embodiments. In addition, the plate body part 11 includes thin plate portions 37 (nozzle hole plate portions) in which the nozzles hole 7 are formed, an interference body plate portion 40 in which three interference bodies 38 are formed, and a thick-walled portion 41 positioned so as to surround the thin plate portions 37 and the interference body plate portion 40. The interference body plate portion 40 is formed by denting the part around the central axis 14 of the plate body part 11 like a hollow disc. In addition, the thin plate portions 37 are formed by, for example, partially countersinking the part of the interference body plate portion 40 around the nozzle holes 7 and the thin plate portions 37 are thinner than the interference body plate portion 40. In addition, in the plate body part 11, the plurality of nozzle holes 7 and the plurality of thin plate portions 37 are formed at regular intervals around the central axis 14 and parts of the nozzle holes 7 pass through (are opened to the front and rear) the front and rear of the thin plate portions 37. In addition, in the plate body part 11, the interference bodies 38 blocking parts of the nozzle holes 7 are formed in the interference body plate portion 40.

The interference bodies 38 formed in the interference body plate portion 40 partially blocks the nozzle holes 7 to form orifices 42. In addition, the interference body 38 has a collision surface 43 with which a part of fuel passing through the nozzle hole 7 collides. A flow of fuel passing through the nozzle hole 7 is disturbed by colliding with the collision surface 43 of the interference body 38.

In addition, in the plate body part 11, a side surface (inclined plane) 44 connecting the outer surface of the thin plate portions 37 to the outer surface of the interference body plate portion 40 is positioned away from an outlet side opening 45 of the nozzle hole 7 equidistantly from of the outlet side opening 45 of the nozzle hole 7 opened to the thin plate portions 37 so as not to interfere with spray injected from the nozzle hole 7. In addition, a side surface (inclined plane) 46 connecting the outer surface of the interference body plate portion 40 to the outer surface of the thick-walled portion 41 is formed so as not to interfere with spray injected from the nozzle hole 7. The thin plate portions 37, the nozzle holes 7, and the interference bodies 38 of the nozzle plate 1 are disposed radially around the central axis 14 of the nozzle plate 1.

In the die 2 illustrated in Fig. 11, the cavity 21 is formed between the first die 18 and the second die 20 and the nozzle hole formation pins 22 for forming the nozzle holes 7 project into the cavity 21. The ends of nozzle hole formation pins 22 abut against the cavity inner plane 23 of the first die 18. The portions of the first die 18 against which the nozzle hole formation pins 22 abut are convexities 47 for forming and the contours of the thin plate portions 37 and the interference bodies 38. The cavity 21 includes the first cavity portion 25 for forming the plate body part 11 and the second cavity portion 26 for forming the cylindrical fitting part 10. At the center of the first cavity portion 25, the gate 3 for injecting molten resin into the cavity 21 is opened. The center of the opening 27 of the gate 3 is positioned in the central axis 28 of the cavity 21 and positioned equidistantly from the centers (the centers of the nozzle hole formation pins 22) of the plurality of nozzle holes 7 (see Figs. 9(a) and 9(b)).

In the die 2 described above, when molten resin is injected from the gate 3 into the cavity 21, then the molten resin flows through the cavity 21 radially, the molten resin concurrently reaches the part (the cavity portion surrounding the plurality of nozzle hole formation pins 22) of the first cavity portion 25 in which the plurality of nozzle holes 7 are formed, the cavity portion surrounding the plurality of nozzle hole formation pins 22 is filled with the molten resin, the molten resin evenly flows toward the radially outward end of the plate body part 11, and the second cavity portion 26 is filled with the molten resin. In addition, in the die 2 according to the embodiment, since the cavity portion of the first cavity portion 25 for forming the interference bodies 38, the thin plate portions 37, and the nozzle holes 7 are positioned in the vicinity of the gate 3 and the dwell pressure is evenly and surely applied to the cavity portion for forming the interference bodies 38, the thin plate portions 37, and the nozzle holes 7, the shapes of the nozzle holes 7 and the vicinity thereof are formed accurately. In the nozzle plate 1 after injection molding, the cut-off mark (gate mark) of the gate 3 is formed in the part of the thick-walled gate base 29 surrounded by the interference body plate portion 40, the part being at the center (the position equidistant from the centers of the nozzle holes 7) of the plate body part 11. The gate base 29 has the same wall thickness as the thick-walled portion 41 of the plate body part 11 to obtain the strength enduring a force applied when the gate 3 is separated from the nozzle plate 1 so that the periphery of the gate 3 is not torn and broken when the gate 3 is separated (see Fig. 9). In addition, the cavity portion 29a for forming the gate base 29 has a capacity large enough to store molten resin for forming the vicinity of the nozzle holes 7 of the plate body part 11 (see Fig. 11). The gate base 29 may be thicker than the thick-walled portion 41 of the plate body part 11 to obtain the strength enduring the force applied during separation of the gate 3. In addition, the gate base 29 may be thinner than the thick-walled portion 41 of the plate body part 11 as long as the gate base 29 has a strength enduring the force applied during separation of the gate 3.

In the manufacturing method and the die 2 for the nozzle plate 1 according to the embodiment described above, the plurality of nozzle holes 7 significantly affecting spray characteristics are formed concurrently, a molding failure caused by differences in the formation times (the charge times of molten resin) of the nozzle holes 7 can be prevented, and the shapes of the nozzle holes 7 and the vicinity thereof can be formed accurately.

In addition, in the manufacturing method for the nozzle plate 1 according to the embodiment and the die 2 for the nozzle plate 1, the shapes of the nozzle holes 7 and the vicinity thereof can be formed accurately as described above. Therefore, corner portions 50 formed between arc-shaped outer edge parts 48 of the interference bodies 38 and the outlet side opening 45 of the nozzle hole 7 and corner portions 51 formed between the interference bodies 38 and the interference bodies 38 are formed in an acute shape without roundness. As a result, the nozzle plate 1 formed by the manufacturing method and the die 2 according to the embodiment can make the end of a liquid film of fuel passing through the orifice 42 sharp so that the fuel is easily atomized by friction with air and can promote the atomization of fuel fine particles in spray.

### [Fourth embodiment]

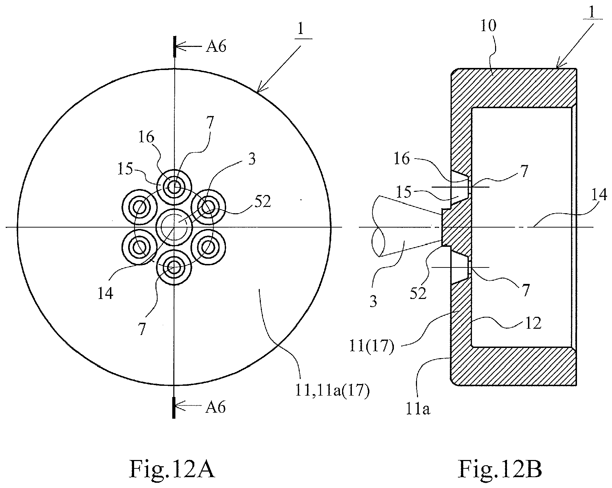

Fig. 12 illustrates the relationship between the nozzle plate 1 according to the fourth embodiment of the invention and the gate 3 for injection molding and illustrates the nozzle plate 1 formed by changing a part of the die. Fig. 12 illustrates a modification of the first embodiment and components common to those in the first embodiment in Fig. 1 are given the same reference numerals to omit duplicate descriptions as in the first embodiment.

As illustrated in Fig. 12, a raised portion 52 is formed in the portion (the portion on a surface 11 a of the plate body part 11 equidistant from the plurality of nozzle holes 7) of the nozzle plate 1 in which the gate 3 is disposed and then the raised portion 52 formed projecting from the surface 11 a of the plate body part 11 is ground after injection molding to remove the gate mark. This embodiment described above can obtain the same effects as in the first embodiment described above.

### [Fifth embodiment]

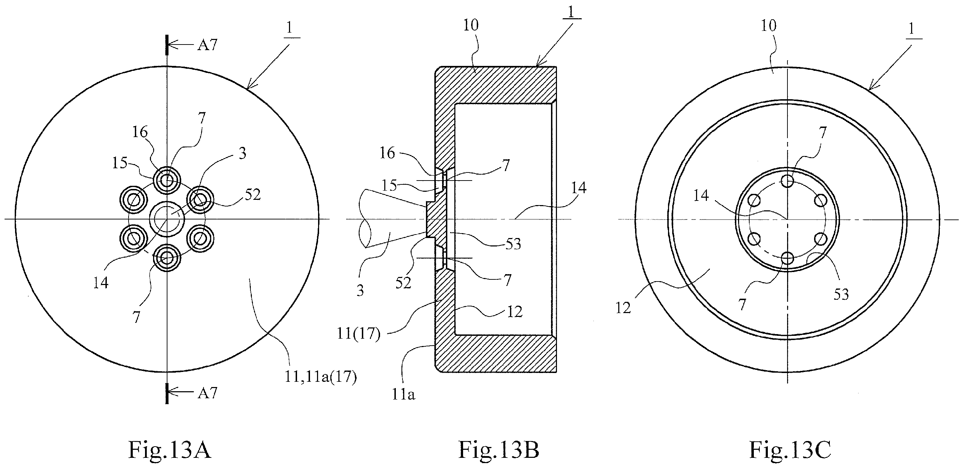

Fig. 13 illustrates the relationship between the nozzle plate 1 according to the fifth embodiment of the invention and the gate 3 for injection molding and illustrates a modification of the nozzle plate 1 according to the fourth embodiment. Fig. 13 illustrates a modification of the fourth embodiment and components common to those in the fourth embodiment in Fig. 12 are given the same reference numerals to omit duplicate descriptions as in the fourth embodiment.

As illustrated in Fig. 13, in the nozzle plate 1 according to the embodiment, as many first nozzle hole formation concave portions 15 as the nozzle holes 7 are formed in the surface 11 a of the plate body part 11 and a second nozzle hole formation concave portion 53 dented like a truncated cone is formed in the central part on the back surface (inner plane 12) of the plate body part 11 to form the plurality of thin plate portions 16 between the bottoms of the first nozzle hole formation concave portions 15 and the bottom of the second nozzle hole formation concave portion 53. In addition, in the nozzle plate 1, the nozzle holes 7 pass through the front and rear of the thin plate portions 16. The embodiment described above can obtain the same effects as in the first embodiment.

### [Sixth embodiment]

The nozzle plate 1 according to the invention is not limited to the above embodiments in which the cut-off mark of the gate 3 is positioned equidistantly from the centers of the plurality of nozzle holes 7. In addition, the invention is not limited to the manufacturing methods according to the above embodiments in which the nozzle plate 1 is manufactured using the die 2 having the gate 3 positioned equidistantly from the centers of the plurality of nozzle holes 7 (gate formation pins 22). That is, in the nozzle plate 1 according to the embodiment, the cut-off mark of the gate 3 does not need to be positioned equidistantly from the centers of the plurality of nozzle holes as long as the cut-off mark of the gate 3 is formed in the part of the plate body part 11, the part being surrounded by the plurality of nozzle holes 7. In the die 2 for the nozzle plate 1 according to the embodiment, even when the gate 3 is not equidistant from the centers of the plurality of nozzle holes 7 (the nozzle hole formation pins 22), if the gate 3 is disposed in the cavity portion (in the plate body part 11) for forming the portion surrounded by the plurality of nozzle holes 7, it is possible to reduce the differences in the times required for molten resin to reach the cavity portions (cavity portions into which the nozzle hole formation pins 22 project) for forming the nozzle holes 7 in the cavity 21 as compared with comparative examples 1 and 2. When the nozzle plate 1 according to the embodiment is injection-molded, the molten resin injected from the gate 3 into the cavity 21 flows radially outward of the cavity 21, fills the cavity portion for forming the nozzle holes 7 and the thin plate portions in the vicinity thereof, flows further radially outward of the cavity 21, and fills the entire cavity 21.

According to the embodiment described above, it is possible to reduce differences in the formation times (the charge times of molten resin) of the nozzle holes 7 significantly affecting spray characteristics as compared with the cases of comparative examples 1 and 2, prevent a molding failure of the nozzle holes 7 and the vicinity thereof, and form the shapes of the nozzle holes 7 and the vicinity thereof accurately.

In the embodiment, in the die 2, the differences in the distances from the centers of the plurality of nozzle holes 7 to the center of the gate 3 are preferably as small as possible to minimize the differences in the times required for molten resin to reach the cavity portions for forming the nozzle holes from the gate 3.

### Reference Signs List

- 1:: nozzle plate (fuel injection device nozzle plate)
- 2:: die
- 3:: gate
- 4:: fuel injection device
- 6:: fuel injection port
- 7:: nozzle hole
- 10:: cylindrical fitting part
- 11:: plate body part
- 16, 34, 37:: thin plate portion
- 17, 35, 41:: thick-walled portion
- 21:: cavity
- 25:: first cavity portion (cavity portion)

## Claims

1. A manufacturing method for a fuel injection device nozzle plate including a plate body part disposed facing a fuel injection port of a fuel injection device,
one thin plate portion or a plurality of thin plate portions of the plate body part provided with a plurality of nozzle holes through which fuel injected from the fuel injection port passes, and
a thick-walled portion formed at a position in the plate body part at which the thin plate portions are surrounded,
wherein, of a cavity for forming the plate body part, a cavity portion for forming a portion surrounded by the plurality of nozzle holes is provided with a gate for injecting molten resin into the cavity and
the molten resin injected from the gate into the cavity flows radially toward portions for forming the nozzle holes.

2. A manufacturing method for a fuel injection device nozzle plate including a plate body part disposed facing a fuel injection port of a fuel injection device,
one thin plate portion or a plurality of thin plate portions of the plate body part provided with a plurality of nozzle holes through which fuel injected from the fuel injection port passes, and
a thick-walled portion formed at a position in the plate body part at which the thin plate portions are surrounded,
a cylindrical fitting part formed integrally with an outer periphery of the plate body part, the cylindrical fitting part being fitted onto and fixed to an outer periphery of a front end side in which the fuel injection port of the fuel injection device is formed,
wherein, of a cavity for forming the plate body part, a cavity portion for forming a portion surrounded by the plurality of nozzle holes is provided with a gate for injecting molten resin into the cavity and
the molten resin injected from the gate into the cavity flows radially toward portions for forming the nozzle holes.

3. The manufacturing method for a fuel injection device nozzle plate according to claim 1 or 2,
wherein the cavity portion is positioned equidistantly from centers of the plurality of nozzle holes so that the molten resin injected from the gate into the cavity concurrently reaches portions for forming the nozzle holes.

4. A die for a fuel injection device nozzle plate including a plate body part disposed facing a fuel injection port of a fuel injection device,
one thin plate portion or a plurality of thin plate portions of the plate body part provided with a plurality of nozzle holes through which fuel injected from the fuel injection port passes, and
a thick-walled portion formed at a position in the plate body part at which the thin plate portions are surrounded,
wherein, of a cavity for forming the plate body part, a cavity portion for forming a portion surrounded by the plurality of nozzle holes is provided with a gate for injecting molten resin into the cavity and
the molten resin injected from the gate into the cavity flows radially toward portions for forming the nozzle holes.

5. A die for a fuel injection device nozzle plate including a plate body part disposed facing a fuel injection port of a fuel injection device,
one thin plate portion or a plurality of thin plate portions of the plate body part provided with a plurality of nozzle holes through which fuel injected from the fuel injection port passes, and
a thick-walled portion formed at a position in the plate body part at which the thin plate portions are surrounded,
a cylindrical fitting part formed integrally with an outer periphery of the plate body part, the cylindrical fitting part being fitted onto and fixed to an outer periphery of a front end side in which the fuel injection port of the fuel injection device is formed,
wherein, of a cavity for forming the plate body part, a cavity portion for forming a portion surrounded by the plurality of nozzle holes is provided with a gate for injecting molten resin into the cavity and
the molten resin injected from the gate into the cavity flows radially toward portions for forming the nozzle holes.

6. The die for a fuel injection device nozzle plate according to any one of claims 4 or 5,
wherein the cavity portion is positioned equidistantly from centers of the plurality of nozzle holes so that the molten resin injected from the gate into the cavity concurrently reaches portions for forming the nozzle holes.

7. The die for a fuel injection device nozzle plate according to any one of claims 4 to 6,
wherein the gate is formed so that a center of an opening to the cavity is aligned with a central axis of the cavity.

8. A fuel injection device nozzle plate including a plate body part disposed facing a fuel injection port of a fuel injection device,
one thin plate portion or a plurality of thin plate portions of the plate body part provided with a plurality of nozzle holes through which fuel injected from the fuel injection port passes,
a thick-walled portion formed at a position in the plate body part at which the thin plate portions are surrounded,
wherein the fuel injection device nozzle plate is formed by injecting molten resin from a gate into a cavity for a die and
a cut-off mark of the gate is positioned in a portion surrounded by the plurality of nozzle holes.

9. The fuel injection device nozzle plate according to claim 8,
wherein the cut-off mark of the gate is positioned equidistantly from centers of the plurality of nozzle holes.

10. The fuel injection device nozzle plate according to claim 8 or 9,
wherein the fuel injection device nozzle plate is formed so that the molten resin concurrently reaches portions of the cavity that form the nozzle holes.

11. The fuel injection device nozzle plate according to any one of claims 8 to 10,
wherein the cut-off mark of the gate is positioned at a center of the plate body part.

12. The fuel injection device nozzle plate according to any one of claims 8 to 11,
wherein the cut-off mark of the gate is positioned in a raised portion formed so as to project from a surface of the plate body part and removed by grinding the raised portion after injection molding.

13. The fuel injection device nozzle plate according to any one of claims 8 to 12,
wherein the plate body part is formed integrally with a cylindrical fitting part so as to block one end side of the cylindrical fitting part to be fitted onto and fixed to an outer periphery of a front end side in which the fuel injection port of the fuel injection device is formed.
